# EUROPEAN PATENT APPLICATION

(11) **EP 2 749 878 A2**
(43) Date of publication of application: **02.07.2014**
(21) Application number: 13197752.2
(22) Date of filing: 17.12.2013
(51) Int. Cl.: G01N 29/04, G01N 29/265

(54) **Stereo vision encoded ultrasonic inspection**

(30) Priority: 31.12.2012 US 201213731709
(71) Applicant: Areva NP Inc., Lynchburg, VA 24506-0935 (US)
(72) Inventor: Thigpen, Bradley A., Harrisburg 28075 (US); Glass III, Samuel William, Lynchburg 24503 (US)
(74) Representative: Blot, Philippe Robert Emile

(57) **Abstract**

This invention applies optical tracking technology with an ultrasound inspection system to associate recorded position data with the inspection data. The reference targets of the optical tracking system can be attached to the inspection assembly to allow fully recorded position information to be associated with the ultrasonic, eddy current, or other nondestructive examination data without substantially impacting the overall envelope of the NDE inspection equipment. Moreover, the optical tracking system can be used to monitor skew or twist of the inspection equipment with respect to the normal rectilinear transducer orientation. The inspection equipment position information is then coupled to the inspection data to provide outputs equivalent to fully encoded multi-axis manipulator automated scans, but with less setup burden and equipment expense.

## Description

### BACKGROUND OF THE INVENTION

### 1. Field of the Invention

The present invention relates to an inspection system, and, more particularly, the present invention relates to a system for performing manual inspections while providing fully encoded data.

### 2. Description of the Related Art

While the present invention may be used in a variety of industries, the environment of a nuclear power plant will be discussed herein for illustrative purposes. A nuclear power plant relies on the nuclear fuel fission reaction inside a pressure vessel to heat the water, thereby producing steam that drives a turbine that drives a generator that ultimately produces electricity. The steam then passes through condensers to turn it back into water for pumps to ultimately circulate the fluid back into the reactor to be re-heated by the fission reaction and the cycle is repeated. This describes the boiling water reactor or BWR cycle. In pressurized water reactor (PWR) reactors, the hot water passes through a steam generator heat exchanger then is pumped back into the reactor to complete the primary water coolant loop. The secondary steam loop sends water from the secondary side of the steam generator heat exchanger to the turbines that are connected to the generators that produce electricity as described above for the BWRs. In the case of both PWRs and BWRs, the steam and fluid are passed through a system of high pressure pipes, vessels, pumps, and heat exchangers that must maintain the pressure boundary leak-tight integrity. This piping and pressure system is continually subject to inside and outside diameter (ID and OD) mechanisms that threaten the system integrity including: corrosion, erosion, fatigue, pitting, and wear. Nondestructive examinations (NDE) such as ultrasound (UT) and various electromagnetic techniques (ET) are recommended or required to be performed on the piping and pressure boundary systems in order to detect failure-mechanisms before they develop into a through-wall failure and leak.

Automated and encoded NDE examinations are preferred because they provide a permanent record of the examination allowing for independent evaluation and generally support better detection and sizing of any discovered indications. Fully automated examinations, however, require several inches of space around the component to be examined and a heavy manipulator or robot to deliver the transducer; which may be difficult to fit into many of the confined spaces. Moreover, delivery and installation of the encoded systems typically requires two or more people who may incur significant radiation dose during the installation and removal processes as well as additional personnel to provide technical support of the mechanical components of the examination system.

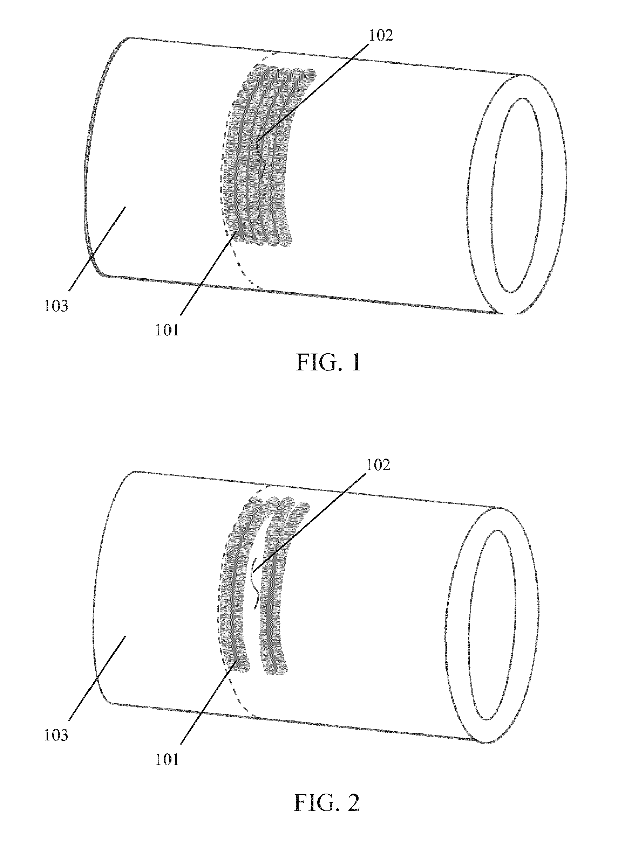

Manual examinations have been allowed for many of these components to reduce costs and dose while preserving a modicum of assurance of the structural integrity of the part. When carefully performed with overlapping scan coverage of the inspection area, all significant cracks or indications can be detected - see Figure 1, which shows the overlapping scan paths 101 of a properly performed inspection to detect a circumferential crack 102 on an object 103 under inspection. Manual examination, however, is subject to human error and irregularity of uncontrolled scanning and may result in significant flaws being missed - see Figure 2, which shows the scan paths 101 of an improperly performed inspection that did not detect a circumferential crack 102 on an object 103 under inspection. Alternatively, the manual scanner can be overly conservative and spend significantly more time than necessary in scanning to generate a very high density scan. With all manual un-encoded scans as discussed above, current manual NDE scan methods offer no auditable record to assure the scan has been conducted with sufficient density to fully inspect the part thereby assuring the component integrity. Thus, automated inspection is favored over manual inspections.

Wheel encoded (one degree of freedom) and ball encoded (two degrees of freedom) freehand scanners allow an inspector to provide a manual examination with the advantages of a fully encoded inspection and several vendors market such devices. These devices, however, are large, subject to wheel or ball slip on the surface thereby leading to inaccurate encoding, and generally are not being widely used. The unreliability of these mechanical devices is worsened by the gumming and slipping effect from the ultrasonic coupling gel that is typically required for UT examinations.

What is needed is a means of allowing inexpensive manual inspections to be performed with the added value of fully encoded data and with minimal additional equipment or schedule delays. Encoding of a manual scanner without significantly expanding the envelope of the transducer package can allow manual inspections to continue with minimal preparation, setup, and scan time while additionally providing the advantages of a fully encoded inspection.

### SUMMARY OF THE INVENTION

This invention applies optical tracking technology with an NDE inspection system to associate encoded position data with the inspection data. This invention uses optical object tracking technology to provide this encoding and associate the position data with the NDE inspection data. Typically the optical encoding electronics function by tracking the position of known reference markers or targets with multiple cameras simultaneously. The optical tracking system is calibrated such that the physical movement of the reference target is converted into meaningful position data related to the distance traveled on the component to be examined. There are numerous vendors that provide various embodiments of this optical tracking technology to measure relative position of the reference target. For this invention, the important features of the optical system are a compact form factor with the ability to translate the point-cloud data positions into surface coordinates of the component to be examined and to provide tracking ability over the entire area of interest.

The reference target of the optical tracking system can be attached to the UT transducer assembly without substantially impacting the overall envelope of the UT transducer. The reference target can be either active, emitting a light source, or passive. Generally passive reference targets are fluoresced with an infrared light source associated with the camera system. Moreover, due to the use of multiple reference targets the system is able to monitor skew or twist of the transducers with respect to the normal rectilinear transducer orientation. This is important since the sensitivity of many UT transducers to the required detectable flaws is compromised if the transducer skew is more than a few degrees from the target alignment orientation. This is difficult to control manually, but the computer can recognize if the transducer is misaligned and can issue an audible and/or visual warning so the operator can adjust and perhaps repeat part of the scan to achieve adequate coverage with the correct alignment. The transducer's position information is coupled to the UT or ET or other NDE data to provide data outputs equivalent to fully encoded multi-axis manipulator automated scans, but with less setup burden and equipment expense. By registering the surface position with respect to three dimensional geometries and complex shapes, this encoding approach also allows full use of three dimensional modeling data interpretation algorithms and three dimensional projections of any reflections observed while preserving the easy setup and data acquisition associated with traditional manual UT examinations.

The inspection system preferably includes an UT or ET transducer or other NDE sensor for obtaining data regarding the internal structure of an object to be inspected plus several small reference targets affixed to the NDE sensor as well as a series of cameras. The cameras associated with the tracking system are positioned around the component to be examined such that the reference target will always be within the field-of-view of at least two cameras during the execution of the examination. The NDE sensor may have a bracket or other device to attach the reference targets without significantly inhibiting the manipulation of the sensor during the examination.

Once the inspection area of the object has been determined and the camera system has been installed, a calibration device is passed over the object surface in order to establish/calibrate the positioning accuracy of the tracking system. Once the positional accuracy of the tracking system is established the NDE sensor and reference target assembly can be scanned over the inspection area to obtain data regarding the internal structure of the object. As the NDE sensor is moved across the inspection area the tracking system converts the position information into surface coordinates that can be used by the NDE data acquisition software to trigger data collection points for recording the examination. One aspect of this processing may be to provide real-time feedback to the system operator as to which portions of the object was inspected, ensuring that no portions of the intended inspection area were omitted. The tracking system can provide feedback to the operator regarding transducer skew relative to the desired orientation of the transducer. If skew or the scan-line spacing exceeds the maximum tolerance, the operator can be alerted to immediately repeat the problem scan area. Following the data acquisition scan, the encoded data may be displayed in a number of display modes including C-scan, B-Scan, D-Scan or terrain-map representations of the scan surface coupled with the NDE signal representing any flaws or anomalies observed within the scan area. Such displays may be analyzed to determine whether any defects are present in the object and to quantify any such defects as to location and size.

### DESCRIPTION OF THE DRAWINGS

The present invention is described with reference to the accompanying drawings, which illustrate exemplary embodiments and in which like reference characters reference like elements. It is intended that the embodiments and figures disclosed herein are to be considered illustrative rather than restrictive.
Figure 1 shows the overlapping scan paths of a properly performed inspection to detect a circumferential crack.
Figure 2 shows the scan paths of an improperly performed inspection that did not detect a circumferential crack.
Figure 3 shows a traditional examination system depicting an NDE sensor and a component to be inspected.
Figure 4 shows a traditional manual examination system with the addition of the optical tracking equipment consisting of reference targets, tracking cameras, and host computer for tracking software.

### DETAILED DESCRIPTION OF THE INVENTION

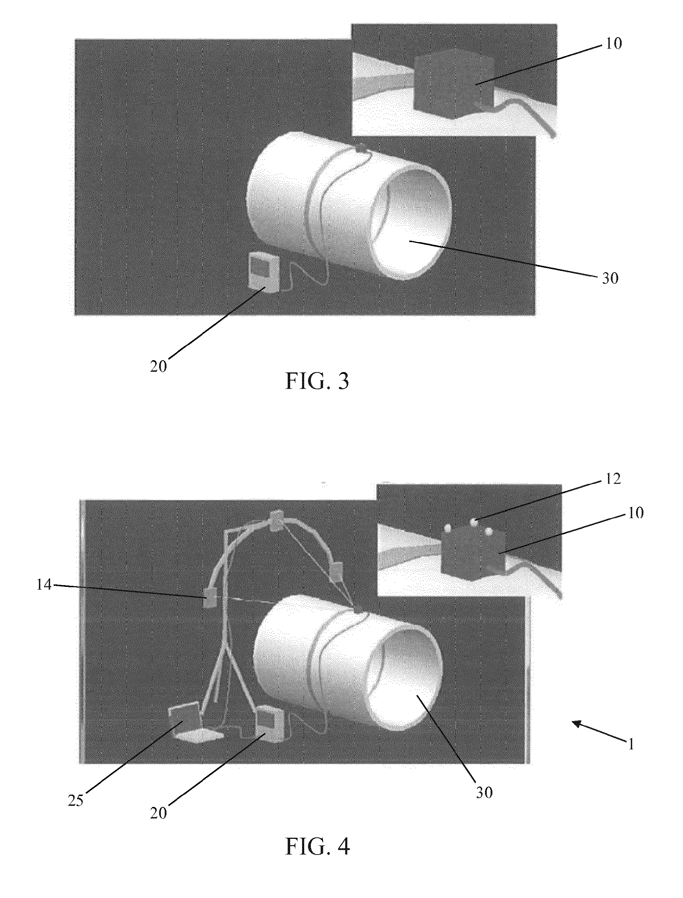

Figure 4 shows an example of a preferred inspection system. For a UT examination, an ultrasound transducer 10 is passed over the object 30 being inspected. The transducer 10 emits pulsed ultrasonic waves or electromagnetic waves that are imparted to the object 30. The waves pass into the object 30 and are reflected back by any interface or material anomaly, such as the back wall of the object 30 or from an imperfection within the object such as a crack, pit, eroded area, or a weld inclusion. The transducer 10 receives the reflected waves and sends the received data to connected diagnostic equipment 20, such as an oscilloscope. For UT inspections, these results typically are displayed in the form of a signal with an amplitude representing the intensity of the reflection and the arrival time of the reflection representing the distance (depth) to the reflecting interface. For electromagnetic sensors, the coils generating the electromagnetic waves are sensed for changes in impedance or magnetic field strength.

Figure 4 depicts the tracking cameras 14 mounted to a tripod and positioned in an arch type configuration around the component 30 to be inspected. This configuration may also be adapted to provide for additional cameras 14 to encircle the entire circumference of the component 30 in order to provide a full 360° of tracking capability during the execution of the examination. The tripod mounting method depicted in Figure 4 may also be adapted to a belt or bracelet type configuration where the cameras are essential mounted directly to the component 30 under examination or remotely mounted by other means. The camera mounting method is not considered essential to this invention, provided a clear line of sight to the reference targets is maintained by two or more cameras 14 at any given point during the execution of the examination.

In use, the system is passed over or along the component 30 to be inspected in the same manner as would the transducer 10 if used alone. The transducer 10 emits and receives ultrasound data, which is provided to additional equipment 20 for processing and interpretation. The cameras 14 track the position of the reference targets 12 and relay that information to the host computer 25 where this information is converted into component surface coordinates and relayed to the NDE instrument to be used as trigger points to capture and record the examination data associated with that surface location on the component under examination. Thus, by capturing the position of each ultrasound inspection, the system allows the operator to ensure that the entirety of the intended measurement area was in fact inspected and the data is recorded for future evaluation and permanent archiving. Moreover, the position tracking and NDE data recording can be used to provide the system operator with real-time information related to the actual coverage of the intended scan area and adjustment can be made to assure complete coverage is obtained. One preferred manner of doing this is to change the image of the object on the operator's display, such as by changing the color of the object on the display as it is examined. In this manner, the operator could ensure that data has been collected for the entirety of the area intended to be inspected. By "coloring" the object on the display, the operator can know that the full inspection has been performed or if there are unexamined areas remaining for inspection. Preferably, the inspection and position data are linked such that an area of the object will be shown as having been inspected if the transducer 10 was passed over that area and inspection data was received. If for some reason the transducer 10 was not operational or inspection data was not received when the transducer 10 was passed over the area, then it should not be shown as having been inspected.

The inspection and position data can also be stored for later examination. This allows skilled personnel to review and interpret the data at a convenient time and location. This minimizes the time required for the inspection system to remain in the environs of the object under inspection, inherently reducing time and expense related to having the inspection equipment in place.

The system thus allows fully encoded UT inspection data to be captured, stored, and displayed as though the scan was performed by an automated scanner without the setup difficulty or additional space required for a traditional automated scan system. Because the data is captured and stored, it may be analyzed and interpreted off-line in a comfortable environment. This allows the acquisition to be performed by relatively untrained inspectors, with the assurance that full measurements were made and subsequently the data may be interpreted by more highly qualified personnel.

By providing multiple cameras 14, the system 1 can provide both absolute centroid position and transducer skew angle information. This provides assurance that the manual orientation of angle beam transducers is in fact aligned in accordance with the planned scan. Spacing of the cameras 14 is chosen in order to assure that a minimum of at least two cameras 14 can always view the reference targets throughout the full intended examination area.

This invention applies optical tracking technology with an UT inspection system to associate encoded position data with the inspection data. The compact electronics of the optical tracking system can be positioned in relatively close proximity to the examination component and reference targets to be tracked can be attached to the UT transducer assembly to allow fully encoded position information to be associated with the UT data without substantially impacting the overall envelope of the UT transducer. Moreover, the optical tracking system can be used to monitor skew or twist of the transducers with respect to the normal rectilinear transducer orientation. The transducer's position information is then coupled to the UT data to provide cross-sectional view of the inspected equipment and data maps (B and C scan data outputs) equivalent to fully encoded multi-axis manipulator automated scans, but with less setup burden and equipment expense. This two dimensional surface encoding approach can be registered with a three dimensional model of the inspection object to allow full use of three dimensional modeling data interpretation algorithms and three dimensional projections of any reflections observed while preserving the easy setup and data acquisition associated with traditional manual UT or alternate NDE examinations.

An additional use of this technology is to enable wheeled or stepping remotely operated vehicles (ROVs) to precisely drive UT transducers along a desired scan path. Without accurate encoding of an ROV, the scan path is difficult or impossible to be sufficiently controlled to assure the complete target volume has been inspected. Moreover, data treatments such as synthetic aperture focusing techniques (SAFT) and other data enhancements that rely heavily on precise positioning data cannot be used, whereas these types of data treatment are possible with the fully encoded feedback from the optical tracking system. With such compact position feedback, independent free-motion manipulating devices may be controlled to move the transducers 10 to any region of interest without a fixed scanner or manipulator.

While the preferred embodiments of the present invention have been described above, it should be understood that they have been presented by way of example only, and not of limitation. It will be apparent to persons skilled in the relevant art that various changes in form and detail can be made therein without departing from the spirit and scope of the invention. Thus the present invention should not be limited by the above-described exemplary embodiments, but should be defined only in accordance with the following claims and their equivalents. Furthermore, while certain advantages of the invention have been described herein, it is to be understood that not necessarily all such advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other advantages as may be taught or suggested herein.

## Claims

1. An inspection system, comprising:
a transducer (10) for obtaining data regarding the internal structure of an object (30);
a nondestructive examination instrument (20) used to digitize information received from said transducer;
a plurality of optical cameras (14) positioned such that an area of the object (30) to be inspected is within a field of vision of said camera (14) for determining the location of the transducer (10) relative the object (30); and
a host computer (25) for converting optical tracking information into a coordinate scheme to be used by the inspection system for recording examination results.

2. The inspection system of claim 1, further comprising a target (12) coupled to said transducer (10) for facilitating viewing by said camera (14).

3. The inspection system of claim 1 or 2, wherein said camera (14) is a stereographic camera.

4. A method of inspecting an object (30) having an outer surface, comprising:
determining a portion of an object (30) to be inspected;
providing an inspection system including a transducer (10) for obtaining structural data regarding the internal structure of the object (30) and an optical tracking system for obtaining position data regarding the position of the inspection system relative the object (30);
inspecting the object with said inspection system; and
capturing said structural data and said position data during said inspecting.

5. The method of claim 4, further comprising ensuring all of said portion was inspected.

6. The method of claim 4 or 5, further comprising
processing said structural data to determine the presence of any defects in the object (30); and
processing said position data to determine which areas of the object (30) were inspected.
